# EUROPEAN PATENT APPLICATION

(11) **EP 1 705 585 A1**
(43) Date of publication of application: **27.09.2006**
(21) Application number: 06001425.5
(22) Date of filing: 24.01.2006
(51) Int. Cl.: G06F 17/30

(54) **System and method for highlighting a domain in a browser display**

(30) Priority: 23.03.2005 US 89066
(71) Applicant: Microsoft Corporation, Redmond WA 98052 (US)
(72) Inventor: Sauve, Aaron J., Redmond, WA 98052 (US); Cummins, Charles, Redmond, WA 98052 (US)
(74) Representative: Goddar, Heinz J.

(57) **Abstract**

Described are a system and method for highlighting a domain in a browser display. Briefly stated, a browsing software is configured to parse an address to identify an important portion, such as a domain name associated with content being displayed. The important portion of the address is then displayed in a highlighted or otherwise emphasized manner, thus enabling a user to visually discern whether to trust the source of the content being displayed.

## Description

### FIELD

Various embodiments described below relate generally to browsing software, and more particularly but not exclusively to personal digital security while using browsing software.

### BACKGROUND

The Internet has achieved widespread acceptance with the consuming public. Today people routinely conduct business or other person transactions using the Internet frequently. For instance, many people use the Internet to conduct online banking or to manage their credit card accounts. The acceptance of the Internet has led to certain malicious individuals seeking to exploit some people's lack of understanding of Internet software. For example, one scheme, known as "phishing", is used by malicious individuals to trick unwary Internet users into believing they are at a trusted site when in fact they are at the malicious individuals site. The malicious individuals then capitalize on this misunderstanding by prompting the users four certain personal information, such as bank account numbers, credit card numbers, social security numbers, user login I.D.'s, passwords, and the like these phishing schemes seem to be more effective than one may think.

Conscientious software developers are constantly striving to improve the security of conducting transactions on the Internet. Improving this security would improve the economic value of the Internet to those software developers and to ordinary commercial retailers. In particular, improving a user's confidence that the site the user is currently viewing is actually an authentic site would go far toward establishing confidence in the overall security of the Internet.

An adequate mechanism for conveying the legitimacy of a Web site to a user has eluded those skilled in the art, until now.

### SUMMARY

The present invention is directed at techniques and mechanisms that implement an automated system and method for highlighting a domain in a browser display. Briefly stated, a browsing software is configured to parse an address to identify an important portion, such as a domain name associated with content being displayed. The important portion of the address is then displayed in a highlighted or otherwise emphasized manner, thus enabling a user to visually discern whether to trust the content being displayed.

### BRIEF DESCRIPTION OF THE DRAWINGS

Non-limiting and non-exhaustive embodiments are described with reference to the following figures, wherein like reference numerals refer to like parts throughout the various views unless otherwise specified.

Figure 1 is a functional block diagram generally illustrating a system for retrieving content from a remote location to a browsing software, in accordance with one implementation of the invention.

Figure 2 is a functional block diagram illustrating components of browsing software that implement one embodiment of the invention.

Figure 3 illustrates several different URLs formatted in accordance with particular implementations of the invention

Figure 4 is an operational flow diagram generally illustrating a process for highlighting an important portion of a URL in a browser display.

Figure 5 is a functional block diagram illustrating a sample computing device that may be used in implementations of the present invention.

### DETAILED DESCRIPTION

The following description is directed at a system and method for highlighting a or emphasizing an important portion of a URL in a browser display. Generally stated, a graphical interface in browsing software is configured to display an address of a current site or page with the domain of the address highlighted. Specific implementations of this general concept will now be described.

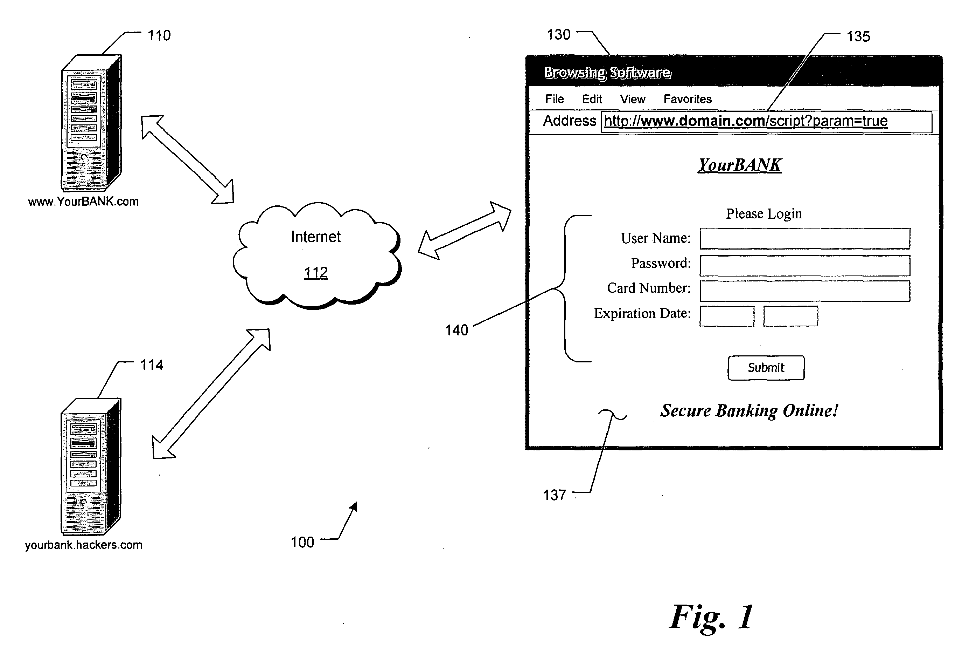

Figure 1 is a functional block diagram generally illustrating a system 100 for performing transactions or otherwise retrieving information over the Internet 112. Included in the system 100 are a graphical display produced by browsing software 130 executing on a client computing system (not shown), a "legitimate" server 110, and an "illegitimate" server 114. Each of these elements is connected over a wide area network, such as the Internet 112. The legitimate server 110 is a computing system associated with a legitimate entity or business, such as a bank's online access, an electronic retailer, or the like. In this example, the legitimate entity is located at the domain "yourbank.com".

The illegitimate server 114 is a computing device under control of some malicious or untoward entity controlled by individuals that intend to deceive people into believing that the illegitimate site 114 is in fact the legitimate site 110. In this example, the illegitimate site 114 resides at the domain "hackers.com". It should be noted that the domains "yourbank.com" and "hackers.com" are used here as examples only and are intended to represent the general concepts of a legitimate site and an illegitimate site for simplicity of discussion only. Neither the inventors nor the assignee of this patent document intend any importance to those particular domains or their respective owners, should there actually be any.

A user uses the browsing software 130 to visit (or "surf") various locations on the Internet 112, such as the legitimate location 110. In one example, the legitimate location 110 may be the online access for the user's bank. In this particular example, the user may have typed a universal resource locator ("URL") into an address bar 135 of the browsing software 130. Alternatively, the user may have clicked a link either at another webpage or perhaps in an e-mail that had been delivered to the user. The resulting web page 137 prompts the user to enter personal identifying information 140, such as a username and password, credit card number and expiration, bank account number, PIN number, social security number, or the like.

A common feature of browsing software generally is the ability to view, in the address bar 135, a URL or Universal Resource Identifier (URI) that identifies the particular location of the content currently being rendered by the browsing software 130. However, with conventional technologies, the most important aspect of the URL may be obscured by the existence of many other less important components, such as the protocol identifier, any script names, parameters that are being passed to those scripts, and the like. Thus, the user may not easily be able to determine that the site currently being viewed is not the expected site. For example, the user may have clicked a link in an e-mail message that the user thought would lead to a site maintained by the legitimate site 110 (e.g., a location within the domain "yourbank.com"). However, the link may have actually led to a site maintained at the illegitimate site 114 that was created to look similar to the legitimate site 110. In this way, the user can be fooled into providing the personal information 140 to the malicious or untoward individuals that control the illegitimate site 114.

In accordance with the invention, a portion of the URL in the address bar 135 is highlighted or otherwise presented in a fashion that distinguishes the portion from the remainder of the URL. In this specific implementation, the domain name "www.yourbank.com" is rendered in a bold (or otherwise highlighted) font while the remainder of the URL is rendered in an ordinary typeface. In this manner, the user's attention is directed to the important portion of the URL, thus increasing the likelihood that the user would determine that he or she is at the illegitimate site 114 rather than the legitimate site 110 as expected.

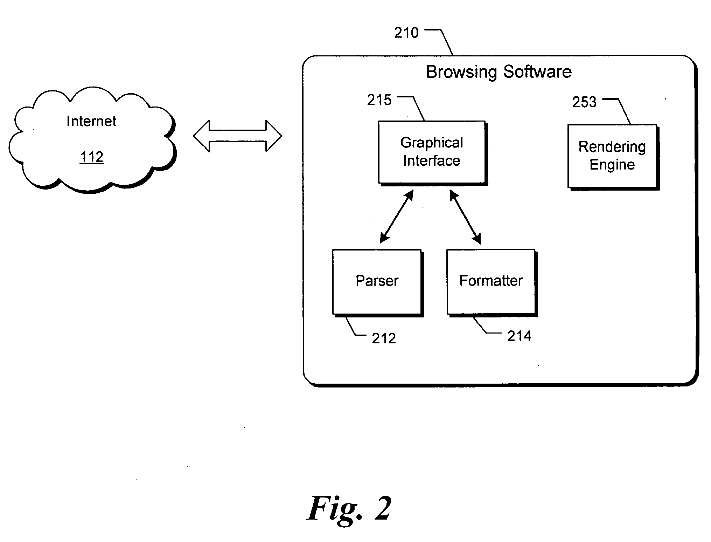

Figure 2 is a functional block diagram illustrating software components of browsing software 210 that are configured in accordance with one implementation of the invention. The browsing software 210 may be any software components or modules that support the retrieval and viewing of content from a wide area network, such as the Internet, using the TCP/IP protocol. The browsing software 210 may be implemented as functionality or modules of code in an operating system, or it may be implemented as a standalone application, or some combination of the two.

In this implementation, the browsing software 210 includes a rendering engine 253 that is configured to render content commonly used by Internet programmers. For instance, the rendering engine 253 may be configured to interpret HyperText Markup Language (HTML) and extensible HTML (XHTML) and render Web pages created in those, or many other, markup languages and retrieved over the Internet 112. Rendering content from Internet sites is well known in the art.

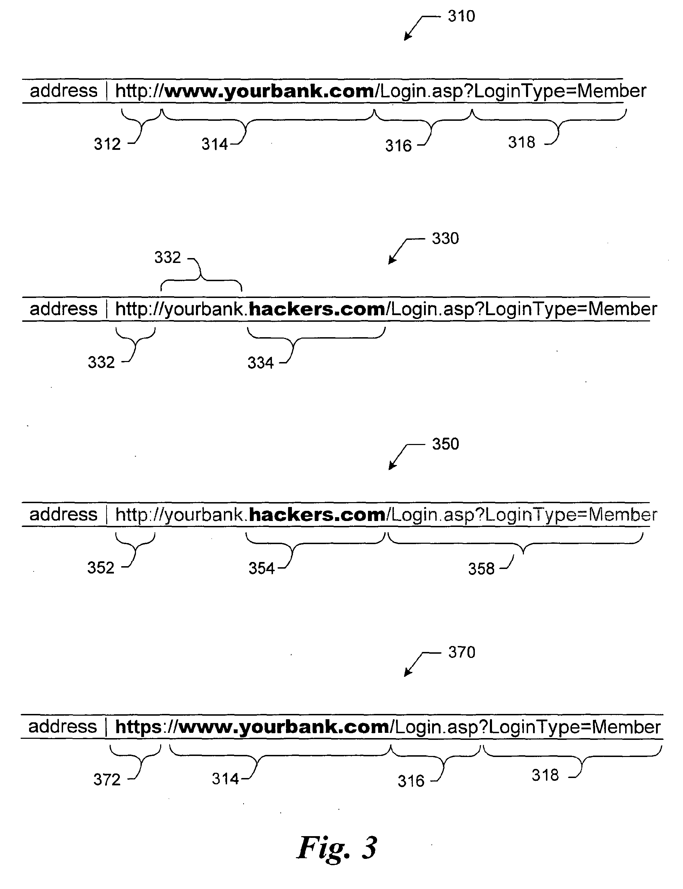

In addition, the browsing software 210 includes a graphical interface 215 that is configured to create a visual display of the content currently being rendered by the rendering engine 253. In addition, the graphical interface 215 is configured to display certain information about the content, such as an address bar including the URL of the current content. In this implementation, the graphical interface 215 interfaces with two other components, a parser 212 and a formatter 214. The parser 212 is responsible for parsing the URLs of each site that is displayed by the graphical interface 215 into certain constituent parts. More specifically, the parser 212 identifies at least one portion of the URL that is of particular importance to the security or integrity of the current site. For example, the domain name (e.g., "microsoft.com") is commonly the most important portion of a conventional URL, as is discussed in greater detail in conjunction with Figure 3.

The formatter 214 is configured to apply some formatting to either the important portion of the URL, or the remainder of the URL other than the important portion. The particular formatting may vary, although any formatting that makes the important portion distinguishable from the remainder of the URL will suffice. Several examples of formatting that may be applied to important portions of URLs are shown in Figure 3 and described below. The reformatted URL is then presented to the user by the graphical interface 215. In this way, the user can more easily determine, visually, whether the user is at the expected location, thus decreasing the likelihood that the user will be fooled into providing sensitive information at an illegitimate site.

Figure 3 illustrates several different URLs formatted in accordance with particular implementations of the invention. For instance a first URL 310 represents an HTTP address of some content maintained at the domain "www.yourbank.com" 314. The URL also includes a protocol portion 312 that indicates this address is a HyperText Transport Protocol (HTTP) address, as are many on the Internet. This example URL 310 also includes a script portion 316 and a parameter portion 318 that serve to pass additional information to the domain yourbank.com in conjunction with retrieving the content at that site. Those skilled in the art will appreciate that very many alternatives to the script portion 316 and the parameter portion 318 are possible.

In accordance with the invention, the domain portion 314 is emphasized or highlighted in some fashion (bolded in this example) to distinguish that portion from the remainder of the URL (e.g., the protocol portion 312, the script portion 316, and the parameter portion 318). As suggested above, the domain name identifies the owner of the address associated with the URL, and as such conveys important information about the provider of the content at that site. The domain name can be easily verified with domain name registrars or services (e.g., "whois"), however to the casual computer user the domain name may be difficult to discern within a complex URL. Displaying the domain name in some fashion that draws the user's attention simplifies the task of discerning the domain name or any other portion of the URL deemed important, such as the protocol being used (e.g., HTTP instead of HTTPS).

The second URL 330 identifies content at a site within the domain "hackers.com" as shown by the highlighted part of the domain portion 334. Note that in this example, the domain portion 334 includes a domain name part that is highlighted (ie., "hackers.com") and a subdomain part 332 that is not highlighted. The subdomain part 332 typically identifies a computing device or subnetwork within the greater domain (i.e., "hackers.com"). Many malicious or untoward individuals take advantage of this domain name structure to fool unsophisticated or unwary users into believing that they are at the "yourbank.com" domain, when in fact they are simply viewing content retrieved from some machine named "yourbank" that is still within the "hackers.com" domain. For this reason, in one implementation, the subdomain part 332 of the URL is not highlighted in the same manner as the greater domain portion 334 to avoid confusion, or more particularly, to draw attention to the fact that the user is not in fact at the domain they might think they are. Alternatively, the subdomain part 332 could be highlighted in some fashion differently than the greater domain portion 334, such as by displaying the text in a colored font, or the like.

The third URL 350 illustrates an alternative method of emphasizing or highlighting the domain portion 354 of the address. More specifically, it will be appreciated that rather than (or in addition to) displaying the domain portion 354 in some highlighted fashion, the remainder of the URL (e.g., protocol portion 352 and extended portion 358) could be de-emphasized, such as by making the remainder of the URL partially or substantially transparent. This is but one example and many other ways of emphasizing an important portion and/or de-emphasizing an unimportant portion of a URL or address will become apparent to those skilled in the art.

The fourth URL 370 represents an HTTPS address of some content maintained at the domain "www.yourbank.com" 314. The URL also includes a protocol portion 372 that indicates this address is a Secure HyperText Transport Protocol (HTTPS) address, as are many on the Internet. The protocol portion 372 is emphasized or highlighted in some fashion (bolded in this example) to draw the user's attention to the fact that the protocol is a secure protocol.

In another alternative, a domain name could be represented as an Internet Protocol (IP) address rather than as an alphanumeric domain name. One example could be a domain represented as "192.168.2.100". In that case, the entire numeric IP address could be highlighted in some fashion.

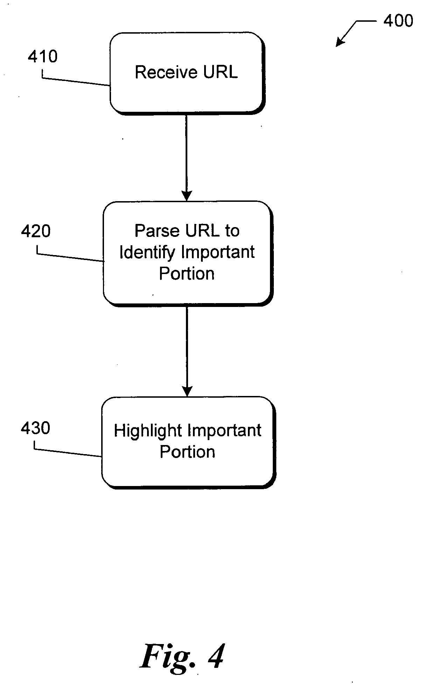

Figure 4 is an operational flow diagram generally illustrating a process 400 for highlighting an important portion of a URL in a browser display. The process 400 may be implemented on a computing device on which resides and executes browsing software for accessing locations on a wide area network, such as the Internet. The process 400 begins at step 410 where browsing software receives a URL from which to retrieve content. The URL may be received in many ways, such as by being typed in by the user, or passed to the browsing software in connection with clicking a link on a Web page or in an electronic (e.g., e-mail) message.

At step 420, the URL received at step 410 is parsed to identify important information. In one particular example, the URL is parsed to identify a domain name within the URL that defines the actual address of the content referred to by the URL. For example, the entire URL could possibly include two or more domain names, such as the case where a domain name is being passed as a parameter in the URL. However, the domain name being identified at this step is the one associated with the domain from which the content is being retrieved. In other implementations, other portions of the URL may be identified as an important portion, either in addition to or in lieu of the domain name. Examples may include the particular protocol being used to retrieve the content, or the like. The important information may be further categorized by importance.

At step 430, the important portion of the URL identified at step 420 is highlighted or otherwise emphasized and displayed by the browsing software. Highlighting or emphasizing could include displaying the important portion using some visual effect, such as an altered typeface (e.g., bold or enlarged font), using a different color, or perhaps by deemphasizing the non-important portion of the URL. Any technique for displaying the important portion (e.g., the domain name) in such a fashion that it is discernable within the URL is acceptable. When the important portion is further categorized by importance, step 430 may progressively emphasize the important portion based on the importance. For example, items close to the domain may be more emphasized than items further from the domain.

Although the above process is illustrated and described sequentially, in other embodiments, the operations described in the steps may be performed in different orders, multiple times, and/or in parallel.

### ILLUSTRATIVE OPERATING ENVIRONMENT

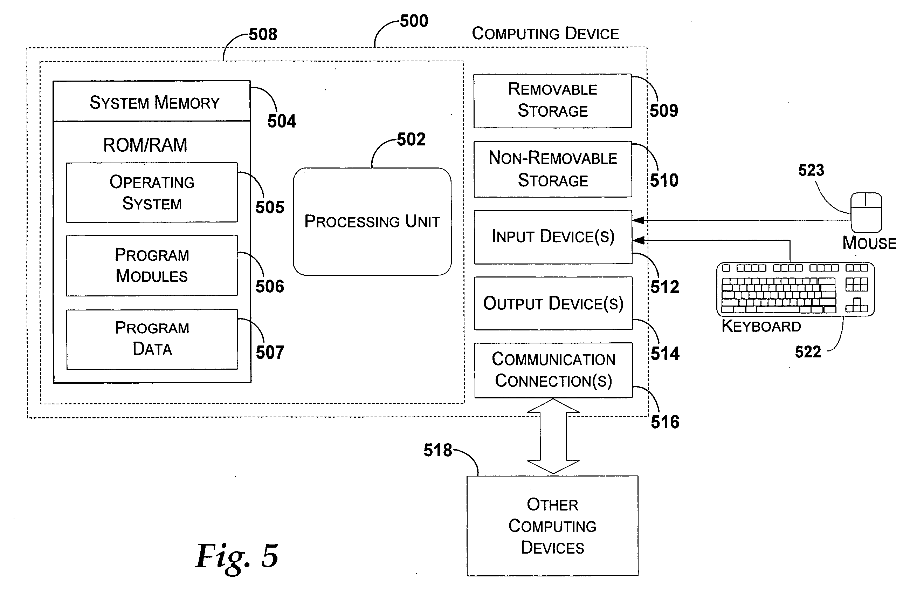

The various embodiments described above may be implemented in general computing systems adapted as either servers or clients. An example computer environment suitable for use in implementation of the invention is described below in conjunction with Figure 5.

### Illustrative Computing Environment

Figure 5 illustrates a sample computing device that may be used in implementations of the present invention. With reference to Figure 5, one exemplary system for implementing the invention includes a computing device, such as computing device 500. In a very basic configuration, computing device 500 typically includes at least one processing unit 502 and system memory 504. Depending on the exact configuration and type of computing device, system memory 504 may be volatile (such as RAM), non-volatile (such as ROM, flash memory, etc.) or some combination of the two. System memory 504 typically includes an operating system 505, one or more program modules 506, and may include program data 507. This basic configuration of computing device 500 is illustrated in Fig. 5 by those components within dashed line 508.

Computing device 500 may have additional features or functionality. For example, computing device 500 may also include additional data storage devices (removable and/or non-removable) such as, for example, magnetic disks, optical disks, or tape. Such additional storage is illustrated in Fig. 5 by removable storage 509 and non-removable storage 510. Computer storage media may include volatile and nonvolatile, removable and non-removable media implemented in any method or technology for storage of information, such as computer readable instructions, data structures, program modules, or other data. System memory 504, removable storage 509 and non-removable storage 510 are all examples of computer storage media. Computer storage media includes, but is not limited to, RAM, ROM, EEPROM, flash memory or other memory technology, CD-ROM, digital versatile disks ("DVD") or other optical storage, magnetic cassettes, magnetic tape, magnetic disk storage or other magnetic storage devices, or any other medium which can be used to store the desired information and which can be accessed by computing device 500. Any such computer storage media may be part of device 500. Computing device 500 may also have input device(s) 512 such as keyboard 522, mouse 523, pen, voice input device, touch input device, scanner, etc. Output device(s) 514 such as a display, speakers, printer, etc. may also be included. These devices are well known in the art and need not be discussed at length here.

Computing device 500 may also contain communication connections 516 that allow the device to communicate with other computing devices 518, such as over a network. Communication connections 516 is one example of communication media. Communication media may typically be embodied by computer readable instructions, data structures, program modules, or other data in a modulated data signal, such as a carrier wave or other transport mechanism, and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. The term computer readable media as used herein includes both storage media and communication media.

While example embodiments and applications have been illustrated and described, it is to be understood that the invention is not limited to the precise configuration and resources described above. Various modifications, changes, and variations apparent to those skilled in the art may be made in the arrangement, operation, and details of the methods and systems of the present invention disclosed herein without departing from the scope of the claimed invention.

## Claims

1. A computer-implemented method for displaying an address in browsing software, comprising:
receiving an address identifying a location of content on a wide area network;
parsing the address to identify an important portion of the address, the important portion having a characteristic associated with the legitimacy of the content; and
displaying the address in a graphical interface with the important portion of the address emphasized to distinguish the important portion from the remainder of the address.

2. The computer-implemented method recited in claim 1, wherein the address comprises a universal resource locator.

3. The computer-implemented method recited in claim 1, wherein the address comprises a universal resource identifier.

4. The computer-implemented method recited in claim 1, wherein the wide area network comprises an Internet.

5. The computer-implemented method recited in claim 1, wherein the important portion of the address comprises a domain name associated with location of the content.

6. The computer-implemented method recited in claim 1, wherein the important portion of the address comprises a protocol used to retrieve the content from the location.

7. The computer-implemented method recited in claim 1, wherein the important portion of the address is emphasized by displaying the important portion using a visual effect that differs from the remaining portion of the address.

8. The computer-implemented method recited in claim 1, wherein the important portion of the address is emphasized by displaying the remaining portion of the address using a visual effect that differs from the important portion.

9. A computer-readable medium having computer-executable instructions for displaying an address in browsing software, the instructions comprising:
receiving an address identifying a location of content on a wide area network;
parsing the address to identify an important portion of the address, the important portion having a characteristic associated with the legitimacy of the content; and
displaying the address in a graphical interface with the important portion of the address emphasized to distinguish the important portion from the remainder of the address.

10. The computer-readable medium recited in claim 9, wherein the address comprises a universal resource locator.

11. The computer-readable medium recited in claim 9, wherein the address comprises a universal resource identifier.

12. The computer-readable medium recited in claim 9, wherein the wide area network comprises an Internet.

13. The computer-readable medium recited in claim 9, wherein the important portion of the address comprises a domain name associated with location of the content.

14. The computer-readable medium recited in claim 9, wherein the important portion of the address comprises a protocol used to retrieve the content from the location.

15. The computer-readable medium recited in claim 9, wherein the important portion of the address is emphasized by displaying the important portion using a visual effect that differs from the remaining portion of the address.

16. The computer-readable medium recited in claim 9, wherein the important portion of the address is emphasized by displaying the remaining portion of the address using a visual effect that differs from the important portion.

17. A computer-readable medium encoded with a data structure, the data structure comprising:
an address that identifies a location of content on a wide area network, the address comprising an important portion and a remainder portion, the important portion being associated with the legitimacy of the content, the important portion being encapsulated with an emphasis to enable discerning the important portion from the remainder portion.

18. The computer-readable medium recited in claim 17, wherein the address comprises a URL or a URI or both.

19. The computer-readable medium recited in claim 17, wherein the important portion comprises a domain name associated with the location of the content.

20. The computer-readable medium recited in claim 17, wherein the emphasis comprises information to cause the important portion to be rendered on a display using a visual effect that differs from the remainder portion.
